Europäisches Patentamt

European Patent Office

Office européen des brevets

(11) Veröffentlichungsnummer : **0 468 317 B1**

## (12) EUROPÄISCHE PATENTSCHRIFT

(45) Veröffentlichungstag der Patentschrift :
07.12.94 Patentblatt 94/49

(51) Int. Cl.⁵ : **H01F 1/053**

(21) Anmeldenummer : **91111665.5**

(22) Anmeldetag : **12.07.91**

(54) **Verfahren zur Herstellung von Magnetmaterial auf Basis des Stoffsystem Sm-Fe-N.**

(30) Priorität : **25.07.90 DE 4023575**

(43) Veröffentlichungstag der Anmeldung :
**29.01.92 Patentblatt 92/05**

(45) Bekanntmachung des Hinweises auf die
Patenterteilung :
**07.12.94 Patentblatt 94/49**

(84) Benannte Vertragsstaaten :
**AT DE FR GB IT NL**

(56) Entgegenhaltungen :
EP-A- 0 213 410
EP-A- 0 288 010
EP-A- 0 453 270
IEEE TRANSACTIONS ON MAGNETICS, Band
23, Nr. 5ll, September 1987, Seiten 3098-3100,
NEW YORK US, S. HIGANO et al.: "Magnetic
Properties of RE-TM-N System"
PATENT ABSTRACTS OF JAPAN, Band 9, Nr.
287 (C-314)[2010], 14. November 1985; &
JP-A-60 131 949

(56) Entgegenhaltungen :
PROCEEDINGS OF THE NATO ADVANCED
STUDY INSTITUTE ON THE SCIENCE AND
TECHNOLOGYOF NANOSTRUCTURED MA-
GNETIC MATERIALS, Crete, 24. Juni - 6. Juli
1990, Seiten439-458; J.M.D. COEY:
"Intermetallic compounds and crystal field
interactions"
APPLIED PHYSICS LETTERS, Band 57, Nr. 26,
24. Dezember 1990, Seiten 2853-2855,New
York, US; K. SCHNITZKE et al.: "High coercivity in Sm2Fe17Nx magnets"
PATENT ABSTRACTS OF JAPAN, Band 15, Nr.
375 (E-1114), 20. September 1991; & JP-A-3 148
805
J.Phys.:Condens. Matter 2 (1990) 6465-6470,
UK;
J.Appl. Phys.69(9),1 May 1991, p.6735-6737

(73) Patentinhaber : SIEMENS
AKTIENGESELLSCHAFT
Wittelsbacherplatz 2
D-80333 München (DE)

(72) Erfinder : Schnitzke, Kurt, Dipl.-Ing.
Geissbergweg 3
W-8524 Neunkirchen/Brand (DE)
Erfinder : Schultz, Ludwig, Dr.
Amselweg 22
W-8526 Bubenreuth (DE)
Erfinder : Katter, Matthias, Dipl.-Ing.
Obleiweg 6
W-8520 Dechsendorf (DE)
Erfinder : Wecker, Joachim, Dr.
Georg-Krauss-Strasse 2
W-8520 Erlangen (DE)

**Beschreibung**

Die Erfindung bezieht sich auf Verfahren zur Herstellung von Magnetmaterial auf Basis des Stoffsystems Sm-Fe-N mit einer kristallinen, hartmagnetischen Phase mit $Th_2Zn_{17}$-Kristallstruktur, in deren Kristallgitter N-Atome eingebaut werden, indem ein Vorprodukt des herzustellenden Magnetmaterials mit einer zweikomponentigen $Sm_2Fe_{17}$-Phase in einer stickstoffhaltigen Atmosphäre erhitzt wird.

Seit einigen Jahren sind Magnetwerkstoffe auf Basis von Stoffsystemen bekannt, die ein Seltenes Erdmetall und ein Übergangsmetall enthalten und sich durch hohe Koerzitivfeldstärken $H_{ci}$ und hohe Energieprodukte $(B*H)_{max}$ auszeichnen. Hauptvertreter sind als binäres Stoffsystem Co-Sm und als ternäres Stoffsystem Nd-Fe-B. Ihre hartmagnetischen Eigenschaften beruhen auf intermetallischen Verbindungen mit einer hohen magnetischen Anisotropie und einer hohen Gefügeausbildung in den jeweiligen Werkstoffen. Die Herstellung dieser Magnetwerkstoffe kann z.B. durch Sintern von Pulvern der Komponenten des entsprechenden Stoffsystems erfolgen (vgl. z.B. EP-A-0 134 304). Darüber hinaus ist es auch möglich, entsprechende Magnetwerkstoffe mittels einer sogenannten Rascherstarrungstechnik herzustellen (vgl. z.B. EP-A-0 284 832).

Bei den entsprechenden ternären Magnetwerkstoffen wird auch das Stoffsystem Sm-Fe-Ti diskutiert (vgl. "J.Appl.Phys.", Vol. 64, No. 10, 1988, Seiten 5720 bis 5722). Seit kurzem ist auch die Existenz von $Sm_2Fe_{17}N_x$ als Magnetwerkstoff bekannt. Dieses Material besitzt die bekannte $Th_2Zn_{17}$-Kristallstruktur. Zu seiner Herstellung wird $Sm_2Fe_{17}$ als Ausgangsmaterial erschmolzen. Das so erhaltene Vorprodukt wird dann in einer $N_2$- oder $NH_3$-Atmosphäre erhitzt, wobei sich die gewünschte hartmagnetische Phase durch Einbau von N-Atomen in die Gitterstruktur des Vorproduktes bildet (vgl. Vortrag von J.M.D.Coey während Tagung des "Nato Advanced Study Institute on the Science and Technology of Nanostructured Magnetic Materials", 25.6. bis 7.7.1990, Heraklion, Kreta, GR).

Aufgabe der vorliegenden Erfindung ist es, dieses bekannte Verfahren zur Herstellung eines hartmagnetischen Materials auf Basis des Stoffsystems Sm-Fe-N dahingehend auszugestalten, daß auf verhältnismäßig einfache Weise die Ausbildung der gewünschten hartmagnetischen Phase zu gewährleisten und dabei ein Material mit hoher Koersitivfeldstärke $H_{ci}$ von insbesondere über 5 kA/cm zu erhalten ist.

Diese Aufgabe wird für ein erstes Verfahren mit den eingangs genannten Merkmalen erfindungsgemäß dadurch gelöst, daß Zunächst ein Vorprodukt mit der zweikomponentigen $Sm_2Fe_{17}$-Phase durch mechanisches Legieren von entsprechenden Ausgangspulvern und durch Wärmebehandlung mit einer der hartmagnetischen Phase des Magnetmaterials entsprechenden Mikrostruktur hergestellt wird und daß dann dieses Vorprodukt in der stickstoffhaltigen Atmosphäre in die hartmagnetische Phase des Stoffsystems $Sm_2Fe_{17}$-N überführt wird.

Die Erfindung geht dabei von der Erkenntnis aus, daß sich mit dem Einbau von N-Atomen innerhalb der bekannten $Th_2Zn_{17}$-Kristallstruktur ohne Änderung des Gittertyps ein Material gewinnen läßt, das hartmagnetische Eigenschaften besitzt. Mit dem Prozeß des an sich bekannten mechanischen Legierens läßt sich dabei vorteilhaft das Vorprodukt bereits mit der Mikrostruktur des herzustellenden Endproduktes ausbilden. Dieses so strukturierte Vorprodukt kann dann verhältnismäßig einfach und reproduzierbar bei erhöhter Temperatur nitriert werden.

Ein weiteres Verfahren zur Herstellung des Magnetmaterials ist dadurch gekennzeichnet, zunächst ein Vorprodukt mit der zweikomponentigen $Sm_2Fe_{17}$-Phase durch Rascherstarrung von einer erschmolzenen Vorlegierung der Zusammensetzung $Sm_xFe_{100-x}$ mit $10 \leqq x \leqq 20$ (jeweils in Atom-%) mit einer der hartmagnetischen Phase des Magnetmaterials entsprechenden Mikrostruktur hergestellt wird und daß dann dieses Vorprodukt in der stickstoffhaltigen Atmosphäre in die hartmagnetische Phase des Stoffsystems $Sm_2Fe_{17}$-N überführt wird. Auch bei diesem Verfahren ergeben sich die genannnten Vorteile.

Vorteilhafte Ausgestaltungen der erfindungsgemäßen Verfahren zur Herstellung des Magnetmaterials gehen aus Unteransprüchen hervor.

Zur weiteren Erläuterung der Erfindung wird nachfolgend auf die Diagramme der Zeichnung Bezug genommen. Dabei sind in den Figuren 1 und 2 Röntgendiffraktogramme bzw. eine Magnetisierungskurve eines über den erfindungsgemäßen Prozeß des mechanischen Legierens gewonnenen Magnetmaterials wiedergegeben. Die Figuren 3 und 4 Zeigen Röntgendiffraktogramme bzw. die Hysteresisschleife eines Magnetmaterials, zu dessen Herstellung eine erfindungsgemäße Rascherstarrungstechnik angewandt wurde.

Das Magnetmaterial mit den geforderten hartmagnetischen Eigenschaften läßt sich vorteilhaft gemäß den nachfolgend als Prozeß A bzw. Prozeß B skizzierten Verfahren ausbilden:

Prozeß A

Um zu dem hartmagnetischen Magnetmaterial des Stoffsystems Sm-Fe-N zu gelangen, wird zunächst ein Vorprodukt mit einer $Sm_2Fe_{17}$-Phase unter Anwendung eines Mahlprozesses hergestellt. Hierzu wird von Pul-

2

vern aus oder mit den beteiligten Komponenten ausgegangen. Entweder werden elementare Pulver verwendet, oder es können auch die beteiligten Elemente in Form von Legierungen und/oder Verbindungen vorliegen. Die pulverförmigen Ausgangskomponenten mit vorbestimmten, allgemein geläufigen Partikelgrößen werden in eine geeignete Mahlvorrichtung gegeben, wie sie von Verfahren des mechanischen Legierens her prinzipiell bekannt ist (vgl. z.B. "Metallurgical Transactions", Vol. 5, Aug. 1974, Seiten 1929 bis 1934). Dabei ist das Mengenverhältnis der einzelnen Anteile durch die vorbestimmte resultierende atomare Konzentration des herzustellenden Vorproduktes bestimmt. So ist eine Einwaage (in Atom-%) vorzusehen, die der Legierung $Sm_{12,5}Fe_{87,5}$ entspricht. Die insbesondere elementaren Pulver der beteiligten Komponenten werden dann dem Mahlprozeß mit Hilfe von gehärteten Stahlkugeln in einem z.B. Ar-gefüllten Stahlbehälter unterzogen. Die Dauer $t_m$ des Mahlprozesses hängt insbesondere von den Mahlparametern ab. Wichtige Parameter sind der Kugeldurchmesser, die Kugelanzahl sowie die verwendeten Materialien der Mahlvorrichtung. Auch die Mahlgeschwindigkeit und das Verhältnis der Stahlkugeln zu der Pulvermenge sind weitere Parameter, welche die notwendige Mahldauer bestimmen. Im allgemeinen liegt die Mahldauer $t_m$ zwischen 1 und 100 Stunden. Eine Mahldauer von zwei bis drei Tagen ist vorteilhaft. Gegebenenfalls kann der Mahlprozeß auch bei erhöhter Temperatur vorgenommen werden.

Am Ende des Mahlprozesses liegt dann ein zweiphasiges Mahlgut aus amorphem Sm-Fe und aus feinverteiltem α-Fe vor. Gegebenenfalls kann die Sm-Fe-Phase auch zumindest teilweise kristallin sein. In diesem Mahlgut muß noch die gewünschte $Th_2Zn_{17}$-Kristallstruktur mit einer vorbestimmten, im Hinblick auf das herzustellende Magnetmaterial optimierten Korngröße eingestellt werden. Die Mikrostruktur, d.h. die Größe der Kristallite in den Körnern, sollte dabei zwischen 30 nm und 500 nm liegen. Hierzu wird eine Wärmebehandlung unter Schutzgas oder Vakuum bei einer Temperatur zwischen 500 °C und 1000 °C, vorzugsweise zwischen 650 °C und 800 °C durchgeführt. Die Dauer dieser Wärmebehandlung liegt zwischen 1 Minute und 10 Stunden, vorzugsweise Zwischen 10 Minuten und 1 Stunde. Diese Wärmebehandlung führt zum einen zur Kristallisation der $Th_2Zn_{17}$-Phase und zum anderen zur Einstellung der sehr feinen Mikrostruktur, die Zur magnetischen Härtung in diesem Material unerläßlich ist. Am Ende der Wärmebehandlung liegt dann ein entsprechendes Vorprodukt mit der weichmagnetischen $Sm_2Fe_{17}$-Phase vor.

In einem weiteren Schritt wird anschließend das so gewonnene pulverförmige Vorprodukt mit der $Sm_2Fe_{17}$-Phase in einer Stickstoff($N_2$)-Atmosphäre geglüht. Die hierfür zu wählende Temperatur soll oberhalb von 300 °C und unterhalb von 600 °C liegen. Im allgemeinen ist für diese Wärmebehandlung eine Gesamtdauer zwischen 1 und 1000 Stunden, vorteilhaft zwischen 10 und 300 Stunden vorzusehen. Hierbei erfolgt ein Einbau von Stickstoff-Atomen in das Kristallgitter. Es ergibt sich so eine Verbindung $Sm_2Fe_{17}N_x$. Dabei wurde festgestellt, daß diese Verbindung für Stickstoffkonzentrationen x existiert, für die $0 < x \leqq 3$ ist.

Ferner ist vom verfahrenstechnischen Standpunkt bemerkenswert, daß die thermische Stabilität der Verbindung $Sm_2Fe_{17}N_x$ mit sinkendem N-Gehalt deutlich abnimmt. Dies bedeutet, daß sich bei einer zu schnellen Nitration bei z.B. 500 °C die $Th_2Zn_{17}$-Phase gegebenenfalls zersetzten kann. So liegt zum Beispiel die Zersetzungstemperatur für x = 0,4 um etwa 100 °C niedriger als für x = 2,94. Aus diesem Grunde sind möglichst hohe x-Werte (in der Nähe von x = 3) als vorteilhaft anzusehen. Die nachfolgende Tabelle 1 zeigt die deutliche Abhängigkeit der Zersetzungstemperatur $T_d$ [in °C] von der Stickstoffkonzentration x [in Atomen pro Einheitsselle]. Bei den angegebenen Meßwerten handelt es sich um ungefähre Werte, oberhalb derer eine Zersetzung eintritt (Onset-Werte):

Tabelle 1

| x [N-Atome pro Einheitszelle] | 0,5 | 1 | 1,5 | 2 | 2,5 |
|---|---|---|---|---|---|
| $T_d$ [°C] | 602 | 627 | 643 | 659 | 673 |

Wegen dieser Abhängigkeit der thermischen Stabilität der $Sm_2Fe_{17}N_x$-Verbindung von der Stickstoffkonzentration ist es besonders vorteilhaft, wenn der Nitrationsprozeß des Vorproduktes hinsichtlich der Temperaturverhältnisse Zweistufig durchgeführt wird, wobei für die erste Stufe eine insbesondere um mindestens 50 °C niedrigere Temperatur als für die zweite Stufe gewählt wird. Ein Ausführungsbeispiel einer entsprechenden zweistufigen Nitration ist nachfolgend angegeben:

## 1. Nitrationsstufe

Die Nitration erfolgt bei einer Temperatur $T_{n1}$ zwischen 300 °C und 400 °C während einer Dauer $t_{n1}$ zwischen 10 und 1000 Stunden, wobei die konkret zu wählende Zeit von der Korngröße des zu nitrierenden Pulvers des Vorproduktes abhängt. Die N-Beladung sollte mindestens bis zu einer Konzentration x = 1,5 erfolgen. Entsprechende Beispiele gehen aus der folgenden Tabelle 2 hervor:

## Tabelle 2

| Korngröße [µm] | 10 | 10 | 5 | 5 |
|---|---|---|---|---|
| $T_{n1}$ [°C] | 400 | 350 | 400 | 350 |
| $t_{n1}$ [h] | 64 | 256 | 16 | 64 |

## 2. Nitrationsstufe

Eine weitere Beladung mit Stickstoff erfolgt bis zur maximal möglichen Konzentration von $x \leqq 3$ bei einer Temperatur $T_{n2}$, die höher liegt als die Temperatur $T_{n1}$ der ersten Nitrationsstufe. Beispielsweise wird bei einer Korngröße von 10 µm eine Temperatur $T_{n2}$ von 500 °C während einer Dauer $t_{n2}$ von 16 Stunden vorgesehen.

Bei diesem zweistufigen Nitrationsprozeß wird in dem ersten Nitrationsschritt vorteilhaft die thermische Stabilität des $Sm_2Fe_{17}$-Nitrids soweit erhöht, daß sich die hartmagnetische Phase bei der im zweiten Nitrationsschritt zur vollständigen Nitration notwendigen höheren Temperatur $T_{n2}$ nicht zersetzen kann.

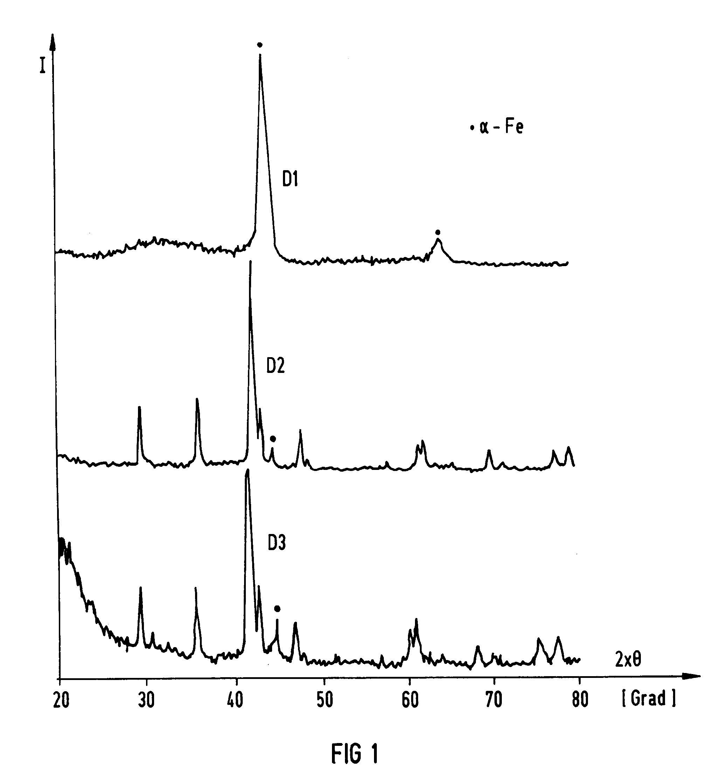

Die Nitration des Vorproduktes geschieht unter Aufweitung der $Th_2Zn_{17}$-Kristallstruktur ohne Änderung des Gittertyps und ohne Änderung der Mikrostruktur. Dieser Sachverhalt ist aus den Röntgendiffraktogrammen (Röntgenbeugungsspektren) ersichtlich, die in dem Diagramm der Figur 1 wiedergegeben sind. In dem Diagramm ist auf der Abszisse der Beugungswinkel 2*Theta (0 in Grad) eingetragen, während in Richtung der Ordinate die zugehörige Intensität I (in willkürlichen Einheiten der Zählrate pro Sekunde) aufgetragen ist. Die in dem oberen Teil des Diagramms wiedergegebene, mit D1 bezeichnete Kurve zeigt dabei das Diffraktogramm für das Mahlgut der Zusammensetzung $Sm_{12,5}Fe_{87,5}$ nach dem mechanischen Legieren. Die Kurve hat das für einen amorphen Zustand typische Aussehen und zeigt zusätzlich zwei verbreiterte $\alpha$-Fe-Reflexe. Die sich nach einer Temperaturbehandlung bei 700 °C einstellende $Th_2Zn_{17}$-Kristallstruktur des Vorproduktes ist aus der mittleren, mit D2 bezeichneten Kurve ersichtlich. Dieses Diffraktrogramm enthält noch Reste von $\alpha$-Fe. Demgegenüber ergibt sich das untere, mit D3 bezeichnete Diffraktogramm für die mit den eingebauten N-Atomen bei 500 °C aufgeweitete $Th_2Zn_{17}$-Kristallstruktur. Aus einem Vergleich der beiden Kurven D2 und D3 kann ohne weiteres erkannt werden, daß bei dem erfindungsgemäßen Magnetmaterial der Gittertyp gegenüber dem Vorprodukt unverändert bleibt.

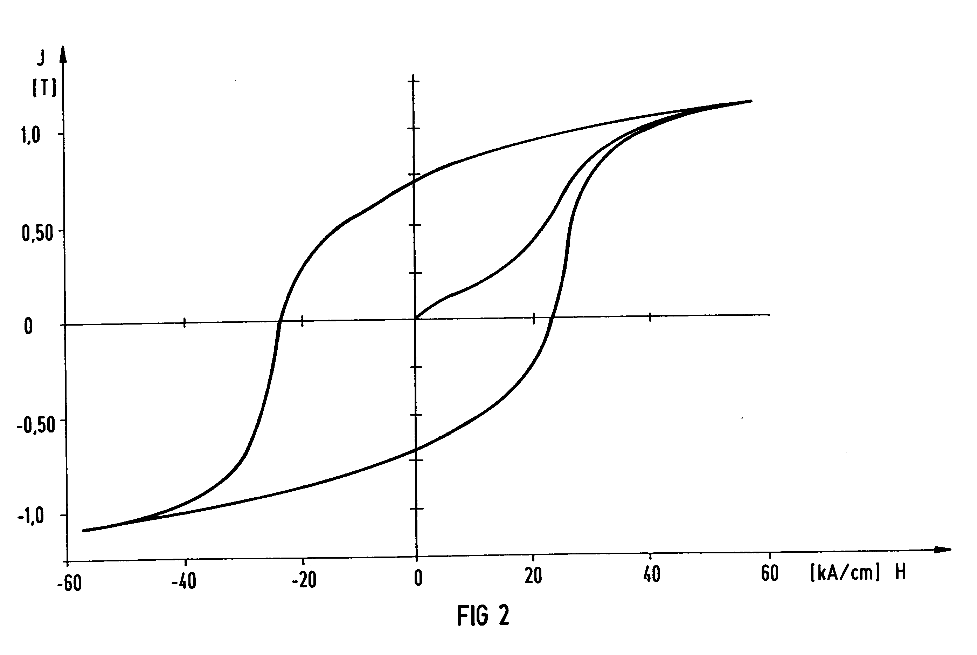

Die Hysteresiskurve des kristallinen, hartmagnetischen Endproduktes aus dem Stoffsystem Sm-Fe-N zeigt das Diagramm der Figur 2. In diesem Diagramm sind in Richtung der Abszisse die Feldstärke H (in kA/cm) und in Ordinatenrichtung die Magnetisierung J (in T) aufgetragen. Die Hysteresiskurve Zeigt eine Remanenz $J_r$ von etwa 0,71 T sowie eine Koerzitivfeldstärke $H_{ci}$ von etwa 23,5 kA/cm.

Die in den Diagrammen der Figuren 1 und 2 gezeigten Kurven werden dann erhalten, wenn man für die einzelnen Glühbehandlungen jeweils eine Glühdauer von 1/2 Stunde vorsieht.

Mit entsprechenden Glühzeiten wurden auch nach dem Prozeß A Magnetmaterialien hergestellt, deren sich bei 20 °C ergebende Daten in der nachfolgenden Tabelle 3 zusammengestellt sind. Die Materialien wurden bei 500 °C nitriert:

Tabelle 3

| Werkstoff<br>(Einwaage in<br>Atom%) | Koerzitiv-<br>feldstärke $H_{ci}$<br>(kA/cm) | Remanenz<br>$J_r$<br>(T) | Energie-<br>dichte $(B*H)_{max}$<br>(kJ/m³) |
|---|---|---|---|
| $Sm_{10,5}Fe_{89,5}+N$ | 15,3 | 0,82 | 55 |
| $Sm_{11,5}Fe_{88,5}+N$ | 17,7 | 0,79 | 68 |
| $Sm_{12,5}Fe_{87,5}+N$ | 23,6 | 0,71 | 87 |
| $Sm_{13,5}Fe_{86,5}+N$ | 24,0 | 0,69 | 73 |

Zu entnehmen sind der Tabelle der Anstieg der Koerzitivfeldstärke $H_{ci}$ und die Abnahme der Remanenz $J_r$ mit steigendem Sm-Anteil, während die Energiedichte B*H ein Maximum durchläuft.

Prozeß B

Abweichend von dem dargestellten Prozeß A kann das erfindungsgemäße Magnetmaterial ebensogut auch über ein Vorprodukt erhalten werden, das unter Anwendung einer Rascherstarrungstechnik erstellt wurde. Hierzu müssen zunächst die Ausgangskomponenten des Vorproduktes mit hinreichender Reinheit in einer Ar-Atmosphäre zu einer Vorlegierung erschmolzen werden. Die Anteile der einzelnen Komponenten werden dabei so gewählt, daß die Vorlegierung die Zusammensetzung $Sm_xFe_{100-x}$ aufweist, wobei x zwischen 10 und 20 (in jeweils in Atom-%) liegt. Zum Erschmelzen können pyrolythische BN- oder $Al_2O_3$-Tiegel verwendet werden. Insbesondere ist auch ein Erschmelzen in einem Lichtbogenofen möglich. Die so erhaltene Vorlegierung aus den Ausgangskomponenten kann dann mittels der an sich bekannten Rascherstarrungstechnik in ein feinkristallines Vorprodukt überführt werden. Vorteilhaft läßt sich hierzu das sogenannte "melt spinning" (Schmelzspinnverfahren) vorsehen, ein Verfahren, das zur Herstellung amorpher Metallegierungen allgemein bekannt ist (vgl. z.B. "Zeitschrift für Metallkunde", Band 69, Heft 4, 1978, Seiten 212 bis 220). Demgemäß wird unter Schutzgas wie z.B. Ar oder unter Vakuum die Vorlegierung z.B. in einem Quarz- oder BN-Tiegel mit Hochfrequenz bei einer Temperatur zwischen 1300 °C und 1500 °C, vorzugsweise zwischen 1350 °C und 1450 °C erschmolzen und dann durch eine Quarzdüse mit einem Düsendurchmesser von beispielsweise 0,5 mm und einem Preßdruck von z.B. 0,25 bar auf ein rotierendes Substrat wie z.B. auf ein Kupferrad oder eine Kupferwalze gespritzt. Das Rad sollte dabei mit einer solchen Drehzahl rotieren, daß sich auf dem Radumfang eine Substratgeschwindigkeit $v_s$ zwischen 5 m/s und 60 m/s, vorzugsweise zwischen 10 m/s und 25 m/s ergibt. Man erhält so kurze bandförmige Stücke des Vorproduktes, die verhältnismäßig spröde sind und als Hauptphase $Sm_2Fe_{17}$ mit der $Th_2Zn_{17}$-Kristallstruktur aufweisen. Um eine optimale Mikrostruktur des Vorproduktes einzustellen, ist entweder eine Wahl geeigneter Abschreckungsparameter vorzusehen. So ist z.B. ein Abschrecken aus einer 1400 °C heißen Schmelze mit Substratgeschwindigkeiten $v_s$ zwischen 15 m/s und 20 m/s besonders günstig. Daneben kann man auch eine thermische Nachbehandlung, insbesondere sehr rasch abgeschreckter Bänder (mit $v_s$ 50 m/s) bei Temperaturen zwischen 500 °C und 1000 °C, vorzugsweise zwischen 650 °C und 800 °C vorsehen. Die Glühdauer liegt dabei im allgemeinen zwischen 1 Minute und 10 Stunden, vorzugsweise zwischen 10 Minuten und 1 Stunde. Bei einer derartigen thermischen Nachbehandlung wird die weichmagnetische $SmFe_2$-Phase des Vorproduktes in die magnetisch härtere $SmFe_3$-Phase eines Zwischenproduktes überführt.

Das so bei dem Prozeß B zu erhaltende Vor- oder Zwischenprodukt wird vorteilhaft vor der abschließenden thermischen Behandlung in einer stickhoffhaltigem Atmosphäre noch mechanisch zerkleinert, vorzugsweise möglichst fein gemahlen, um so zu einer Reduktion der erforderlichen Nitrationszeiten zu gelangen. Insbesondere kann das Vor- oder Zwischenprodukt auf Korngrößen unter 40 μm pulverisiert oder gemörsert werden. Danach wird es entsprechend Prozeß A zur magnetischen Härtung einer Glühung bei Temperaturen zwischen 300 °C und 600 °C unter Ausbildung der gewünschten $Sm_2Fe_{17}N_x$-Phase unterzogen.

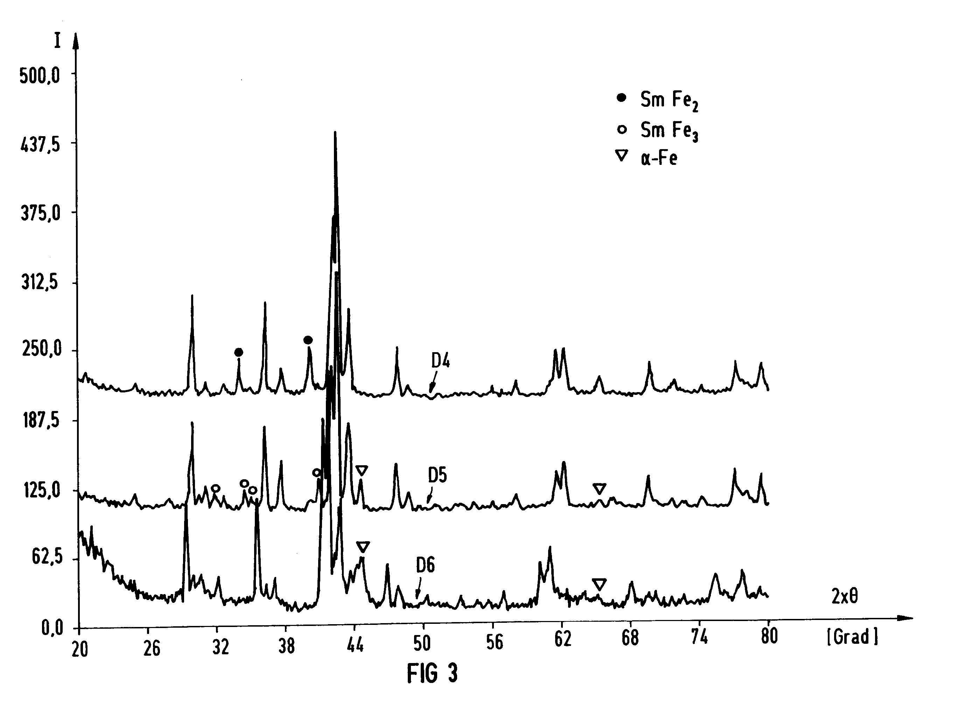

Die sukzessive Bildung der hartmagnetischen $Sm_2Fe_{17}N_x$-Phase mittels der verschiedenen Temperaturbehandlungen läßt sich aus dem Diagramm der Figur 3 ablesen. In diesem Diagramm sind entsprechend Figur 1 drei Röntgendiffraktogramme von rasch abgeschrecktem $Sm_{15}Fe_{85}$ wiedergegeben, und zwar

a) nach dem Abschrecken von T = 1400 °C bei $v_s$ = 20 m/s (Kurve D4),

b) nach einer zusätslichen Glühung während 4 Stunden bei 800 °C in Ar (Kurve D5) und

c) nach einer abschließenden Glühung von 16 Stunden bei 400 °C in einer $N_2$-Atmosphäre (Kurve D6).

In dem Diagramm sind dabei der $SmFe_2$-Phase und der $SmFe_3$-Phase zuzuordnende Peaks sowie die $\alpha$-Fe-Reflexe besonders gekennzeichnet.

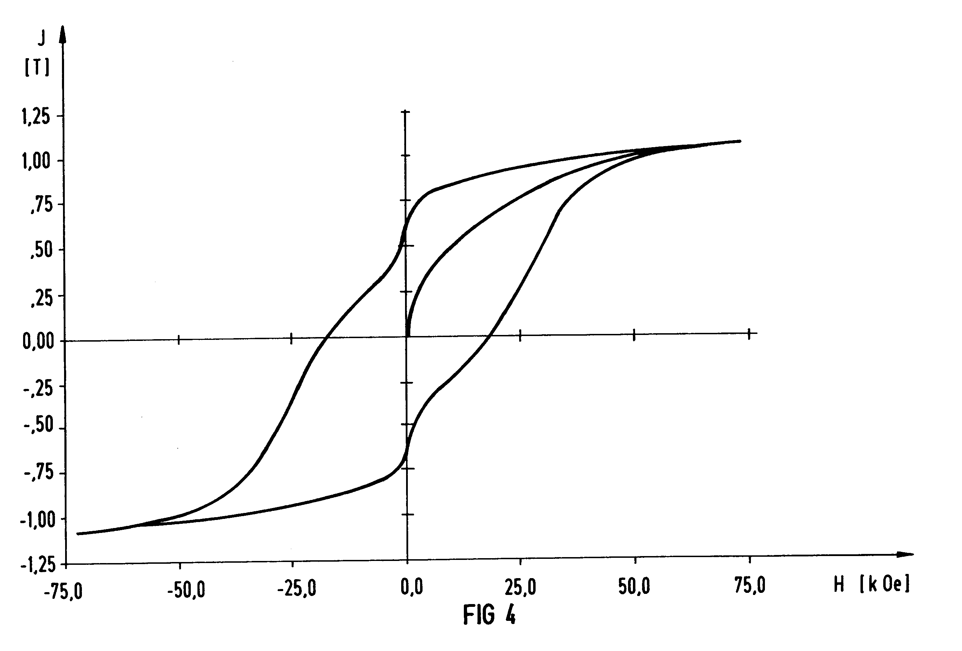

Aus Figur 4 geht eine weitere Hysteresiskurve hervor, die sich für ein Magnetmaterial der Zusammensetzung $Sm_{13}Fe_{87}N_x$ ergibt. Dieses Material wurde entsprechend dem Material hergestellt, das die in Figur 3 gezeigte Kurve D6 ergibt. Für Figur 4 ist eine Figur 2 entsprechende Darstellung gewählt. Aus der in Figur 4 gezeigten Kurve sind eine maximale Koersitivfeldstärke $H_{ci}$ von etwa 17,9 kOe, eine Remanenz $J_r$ von 0,63 T und eine Energiedichte $(B*H)_{max}$ von 44 kJ/m³ abzulesen.

## Patentansprüche

1. Verfahren zur Herstellung von Magnetmaterial auf Basis des Stoffsystems Sm-Fe-N mit einer kristallinen, hartmagnetischen Phase mit $Th_2Zn_{17}$-Kristallstruktur, in deren Kristallgitter N-Atome eingebaut werden, indem ein Vorprodukt des herzustellenden Magnetmaterials mit einer zweikomponentigen $Sm_2Fe_{17}$-Phase in einer stickstoffhaltigen Atmosphäre erhitzt wird, **dadurch gekennzeichnet**, daß zunächst ein Vorprodukt mit der zweikomponentigen $Sm_2Fe_{17}$-Phase durch mechanisches Legieren von entsprechenden Ausgangspulvern und durch Wärmebehandlung mit einer der hartmagnetischen Phase des Magnetmaterials entsprechenden Mikrostruktur mit Kristallitgrößen von 30-500 nm hergestellt wird und daß dann dieses Vorprodukt in der stickstoffhaltigen Atmosphäre in die hartmagnetische Phase des Stoffsystems $Sm_2Fe_{17}N$ überführt wird.

2. Verfahren nach Anspruch 1, **dadurch gekennzeichnet**, daß mit dem mechanischen Legieren ein zweiphasiges Mahlgut aus zumindest teilweise amorphem Sm-Fe und aus $\alpha$-Fe hergestellt und dann dieses Mahlgut mittels der Wärmebehandlung in das kristalline Vorprodukt mit der Mikrostruktur überführt wird.

3. Verfahren nach Anspruch 1 oder 2, **dadurch gekennzeichnet**, daß die Wärmebehandlung Zur Herstellung des Vorproduktes bei einer Temperatur zwischen 500 °C und 1000 °C, vorzugsweise zwischen 650 °C und 800 °C vorgenommen wird.

4. Verfahren nach einem der Ansprüche 1 bis 3, **dadurch gekennzeichnet**, daß die Wärmebehandlung zur Herstellung des Vorproduktes während einer Dauer zwischen 1 Minute und 10 Stunden, vorzugsweise zwischen 10 Minuten und 1 Stunde vorgenommen wird.

5. Verfahren zur Herstellung von Magnetmaterial auf Basis des Stoffsystems Sm-Fe-N mit einer kristallinen, hartmagnetischen Phase mit $Th_2Zn_{17}$-Kristallstruktur, in deren Kristallgitter N-Atome eingebaut werden, indem ein Vorprodukt des herzustellenden Magnetmaterials mit einer zweikomponentigen $Sm_2Fe_{17}$-Phase in einer stickstoffhaltigen Atmosphäre erhitzt wird, **dadurch gekennzeichnet**, daß zunächst ein Vorprodukt mit der zweikomponentigen $Sm_2Fe_{17}$-Phase durch Rascherstarrung einer erschmolzenen Vorlegierung der Zusammensetzung $Sm_xFe_{100-x}$ mit $10 \leqq x \leqq 20$ (jeweils in Atom-%) mit einer der hartmagnetischen Phase des Magnetmaterials entsprechenden Mikrostruktur mit Kristallitgrößen von 30-500 nm hergestellt wird und daß dann dieses Vorprodukt in der stickstoffhaltigen Atmosphäre in die hartmagnetische Phase des Stoffsystems $Sm_2Fe_{17}$-N überführt wird.

6. Verfahren nach Anspruch 5, **dadurch gekennzeichnet,** daß die bei einer Temperatur zwischen 1300 °C und 1500 °C, vorzugsweise zwischen 1350 °C und 1450 °C erschmolzene Vorlegierung mittels eines Schmelzspinnverfahrens abgeschreckt wird, indem die erschmolzene Vorlegierung auf ein rotierendes Substrat mit einer Umfangsgeschwindigkeit zwischen 5 m/s und 60 m/s, vorzugsweise zwischen 10 m/s und 25 m/s gespritzt wird.

7. Verfahren nach Anspruch 5 oder 6, **dadurch gekennzeichnet**, daß das Vorprodukt vor der Stickstoff-Behandlung mechanisch zerkleinert wird.

8. Verfahren nach Anspruch 7, **dadurch gekennzeichnet**, daß mit dem mechanischen Zerkleinern Korngrößen unter 40 μm erzeugt werden.

9. Verfahren nach einem der Ansprüche 5 bis 8, **dadurch gekennzeichnet**, daß das Vorprodukt mit der $Sm_2Fe_{17}$-Phase bei einer Temperatur zwischen 500 °C und 1000 °C, vorzugsweise zwischen 650 °C und 800 °C unter Schutzgas oder Vakuum thermisch bis zur Ausbildung der Mikrostruktur nachbehandelt wird.

10. Verfahren nach einem der Ansprüche 1 bis 9, **dadurch gekennzeichnet**, daß die Ausbildung der hartmagnetischen Phase in der stickstoffhaltigen Atmosphäre bei einer Temperatur zwischen 300 °C und 600 °C vorgenommen wird.

11. Verfahren nach Anspruch 10, **gekennzeichnet durch** einen zweistufigen Prozeß zur Ausbildung der hartmagnetischen Phase, wobei in der ersten Stufe eine Temperatur vorgesehen wird, die niedriger als die für die zweite Stufe zu wählende Temperatur ist.

12. Verfahren nach Anspruch 11, **dadurch gekennzeichnet**, daß für die erste Stufe eine Temperatur zwischen 300 °C und 400 °C vorgesehen wird.

13. Verfahren nach einem der Ansprüche 10 bis 12, **dadurch gekennzeichnet**, daß die Wärmebehandlung zur Ausbildung der hartmagnetischen Phase in der stickstoffhaltigen Atmosphäre während einer Gesamtdauer zwischen 1 und 1000 Stunden, vorzugsweise zwischen 10 und 300 Stunden vorgenommen wird.

## Claims

1. Process for the production of magnetic material based on the Sm-Fe-N system of substances and containing a crystalline, hard magnetic phase having a $Th_2Zn_{17}$ crystalline structure wherein N atoms are incorporated in the crystal lattice, by heating a preliminary product of the magnetic material to be produced, which contains a two-component $Sm_2Fe_{17}$ phase, in an atmosphere containing nitrogen, characterised in that firstly a preliminary product having the two-component $Sm_2Fe_{17}$ phase is prepared with a microstructure having crystallite sizes of from 30 to 500 nm which corresponds to the hard magnetic phase of the magnetic material by means of mechanical alloying of the corresponding pulverulent starting materials and thermal treatment, and that then the said preliminary product is transformed in a nitrogen-containing atmosphere into the hard magnetic phase of the system of substances $Sm_2Fe_{17}N$.

2. The process according to claim 1, characterised in that a two-phase ground material composed of at least partly amorphous Sm-Fe and of $\alpha$-Fe is produced by mechanical alloying and the said ground material is then transformed by means of thermal treatment into the crystalline preliminary product having the microstructure.

3. The process according to claim 1 or 2, characterised in that thermal treatment for the production of the preliminary product is conducted at a temperature of between 500°C and 1000°C, preferably between 650°C and 800°C.

4. The process according to one of claims 1 to 3, characterised in that thermal treatment for the production of the preliminary product is conducted over a period of between 1 minute and 10 hours, preferably of between 10 minutes and 1 hour.

5. The process for the production of magnetic material based on the Sm-Fe-N system of substances and containing a crystalline, hard magnetic phase having a $Th_2Zn_{17}$ crystalline structure wherein N atoms are incorporated in the crystal lattice, by heating a preliminary product of the magnetic material to be produced, which contains a two-component $Sm_2Fe_{17}$ phase, in an atmosphere containing nitrogen, characterised in that firstly a preliminary product having the two-component $Sm_2Fe_{17}$ phase is prepared with a microstructure having crystallite sizes of from 30 to 500 nm which corresponds to the hard magnetic phase of the magnetic material by rapid quenching of a molten preliminary alloy of the composition $Sm_xFe_{100-x}$, wherein $10 \leqq x \leqq 20$ (in each case in atomic %), , and that then the said preliminary product is transformed in a nitrogen-containing atmosphere into the hard magnetic phase of the system of substances $Sm_2Fe_{17}N$.

6. The process according to claim 5, characterised in that at a temperature of between 1300°C and 1500°C, preferably between 1350°C and 1450°C, the melted preliminary alloy is quenched by means of a melt spinning process, wherein the melted preliminary alloy is sprayed onto a rotating substrate whereof the velocity at the circumference is between 5 m/s and 60 m/s, preferably between 10 m/s and 25 m/s.

7. The process according to claim 5 or 6, characterised in that, prior to the treatment with nitrogen, the preliminary product is mechanically comminuted.

8. The process according to claim 7, characterised in that particle sizes of less than 40 $\mu$m are produced by the mechanical comminution.

9. The process according to one of claims 5 to 8, characterised in that the preliminary product containing the $Sm_2Fe_{17}$ phase is subjected under inert gas or vacuum to thermal post-treatment at a temperature of between 500°C and 1000°C, preferably between 650°C and 800°C, until the microstructure has formed.

10. The process according to one of claims 1 to 9, characterised in that the formation of the hard magnetic phase in the atmosphere containing nitrogen is conducted at a temperature of between 300°C and 600°C.

11. The process according to claim 10, characterised by a two-stage process for the formation of the hard magnetic phase wherein a temperature is provided for the first stage which is lower than the temperature to be selected for the second stage.

12. The process according to claim 11, characterised in that a temperature of between 300°C and 400°C is provided for the first stage.

13. The process according to one of claims 10 to 12, characterised in that the thermal treatment for the formation of the hard magnetic phase in the atmosphere containing nitrogen is conducted for a total period of between 1 and 1000 hours, preferably of between 10 and 300 hours.

## Revendications

1. Procédé pour la fabrication de matériaux magnétiques à base du système de substances Sm-Fe-N ayant une phase cristalline à magnétisme dur à structure cristalline $Th_2Zn_{17}$, dans le réseau cristallin de laquelle sont incorporés des atomes-N, en chauffant un précurseur du matériau magnétique à fabriquer avec une phase $Sm_2Fe_{17}$ à deux composants dans une atmosphère contenant de l'azote, **caractérisé en ce qu'**en premier lieu l'on prépare un précurseur avec la phase $Sm_2Fe_{17}$ à deux composants et avec une microstructure correspondant à la phase à magnétisme dur du matériau magnétique et ayant des grosseurs de cristallites de 30 à 500 nm par alliage mécanique de poudres de base adéquates et par traitement thermique, et en ce que ce précurseur est ensuite transformé dans l'atmosphère contenant de l'azote dans la phase à magnétisme dur du système de substances $Sm_2Fe_{17}$-N.

2. Procédé selon la revendication 1, caractérisé en ce qu'on prépare par l'alliage mécanique un produit broyé à deux phases à partir de Sm-Fe au moins partiellement amorphe et de $\alpha$-Fe et ce produit broyé est ensuite transformé au moyen du traitement thermique dans le précurseur cristallin ayant ladite microstructure.

3. Procédé selon les revendications 1 ou 2, caractérisé en ce que le traitement thermique pour la préparation du précurseur est effectué à une température comprise entre 500°C et 1000°C, de préférence entre 650°C et 800°C.

4. Procédé selon une des revendications 1 à 3, caractérisé en ce que le traitement thermique pour la fabrication du précurseur est effectué pendant une durée comprise entre 1 minute et 10 heures, de préférence entre 10 minutes et 1 heure.

5. Procédé de fabrication de matériaux magnétiques à base du système de substance Sm-Fe-N ayant une phase cristalline à magnétisme dur à structure cristalline $Th_2Zn_{17}$, dans le réseau cristallin de laquelle sont incorporés des atomes N, en chauffant un précurseur du matériau magnétique à fabriquer avec une phase $Sm_2Fe_{17}$ à deux composants dans une atmosphère contenant de l'azote, **caractérisé en ce qu'**en premier lieu l'on prépare un précurseur avec la phase $Sm_2Fe_{17}$ à deux composants et avec une microstructure correspondant à la phase à magnétisme dur du matériau magnétique et ayant des grosseurs de cristallites de 30 à 500 nm par solidification rapide d'un préalliage fondu de la composition $Sm_xFe_{100-x}$ avec $10 \leq x \leq 20$ (en % atomique), et en ce que ce précurseur est ensuite transformé dans l'atmosphère contenant de l'azote dans la phase à magnétisme dur du système de substances $Sm_2Fe_{17}$-N.

6. Procédé selon la revendication 5, caractérisé en ce que le préalliage, fondu à une température comprise entre 1300°C et 1500°C, de préférence entre 1350°C et 1450°C, est refroidi brusquement au moyen d'un procédé de filage de fonte, par le fait que le préalliage fondu est projeté sur un substrat en rotation à une vitesse circonférencielle comprise entre 5 m/s et 60 m/s, de préférence entre 10 m/s et 25 m/s.

7. Procédé selon les revendications 5 ou 6, caractérisé en ce que le précurseur est broyé mécaniquement avant le traitement par azote.

8. Procédé selon la revendication 7, caractérisé en ce que le broyage mécanique produits des grosseurs de grains inférieures à 40 $\mu$m.

9. Procédé selon une des revendications 5 à 8, caractérisé en ce que le précurseur avec la phase $Sm_2$-$Fe_{17}$ subit un post-traitement thermique sous un gaz protecteur ou sous vide à une température comprise entre 500°C et 1000°C, de préférence entre 650°C et 800°C, jusqu'à la formation de ladite microstructure.

10. Procédé selon une des revendications 1 à 9, caractérisé en ce que la formation de la phase à magnétisme dur dans l'atmosphère contenant de l'azote est a lieu à une température comprise entre 300°C et 600°C.

11. Procédé selon la revendication 10, caractérisé par un processus en deux étapes pour la formation de la phase à magnétisme dur, dans la première étape étant prévue une température inférieure à la température à choisir pour la seconde étape.

12. Procédé selon la revendication 11, caractérisé en ce que une température comprise entre 300°C et 400°C est prévue pour la première étape.

13. Procédé selon une des revendications 10 à 12, caractérisé en ce que le traitement thermique pour former la phase à magnétisme dur est effectué dans l'atmosphère contenant de l'azote pendant une durée totale comprise entre 1 et 1000 heures, de préférence entre 10 et 300 heures.

FIG 1

FIG 2

EP 0 468 317 B1

FIG 3

FIG 4